## Europäisches Patentamt
## European Patent Office
## Office européen des brevets

(19)

(11) Veröffentlichungsnummer: **0 203 536**
**B1**

(12)

# EUROPÄISCHE PATENTSCHRIFT

(45) Veröffentlichungstag der Patentschrift:
**02.08.89**

(51) Int. Cl.⁴: **G 01 B 7/10**

(21) Anmeldenummer: **86106985.4**

(22) Anmeldetag: **22.05.86**

(54) **Messkopf zur induktiven Messung der Dicke einer isolierenden Schicht auf einem elektrischen Leiter.**

(30) Priorität: **28.05.85 CH 2235/85**

(43) Veröffentlichungstag der Anmeldung:
**03.12.86 Patentblatt 86/49**

(45) Bekanntmachung des Hinweises auf die Patenterteilung:
**02.08.89 Patentblatt 89/31**

(84) Benannte Vertragsstaaten:
**DE FR GB IT SE**

(56) Entgegenhaltungen:
**AT-B-349 771**
**CH-A-564 182**
**GB-A-2 145 827**

(73) Patentinhaber: **ZELLWEGER USTER AG, Wilstrasse 11, CH- 8610 Uster (CH)**

(72) Erfinder: **Marugg Leo, Bütz 2, CH- 9473 Gams (CH)**

LIBER, STOCKHOLM 1989

EP 0 203 536 B1

## Beschreibung

Die Erfindung betrifft einen Messkopf zur induktiven Messung der Dicke einer isolierenden Schicht auf einem elektrischen Leiter, Vorzugsweise auf einem Kabel, mit einer Spule zur Erzeugung eines magnetischen Streufeldes, mit einem eine gewölbte Stirnfläche aufweisenden Auflageteil zur Auflage auf den zu vermessenden Leiter mit der isolierenden Schicht, und mit einer Einrichtung zur Messung der durch einen in das Streufeld der Spule eingetauchten elektrischen Leiter bewirkten Änderungen der Induktivität oder der Güte der Spule, wobei die Spule so ausgebildet und angeordnet ist, daß im Bereich der Stirnfläche des Auflageteils die geometrischen Orte gleicher Feldstärke des Streufeldes in einer Ebene auf konzentrischen Kreisen liegen.

Bei einem aus der BG-A-2 145 827 bekannten Messkopf dieser Art ist der Kern der Spule zapfenartig ausgebildet und besteht aus einem zentralen Dorn aus Hartmetall von geringer Permeabilität und aus einem diesen Dorn umgebenden rohartigen Teil aus einem Material höherer Permeabilität. Dieser Kern ragt aus Messkopf und ist an seinem freien Ende abgerundet. Durch diese Ausbildung des Spulenkerns soll insbesondere erreicht werden, dass zwischen der Grösse der in Induktionsspule erzeugten Spannung und der zu bestimmmenden Dicke der isolierenden Schicht eine lineare Beziehung besteht.

Diese Aufgabe wird gelöst, weil nämlich durch die beschriebene Ausbildung des Spulenkerns eine Konzentration der Kraftlinien um die Längsachse des Zapfens verhindert und dadurch ein gleichmässiger magnetischer Fluss durch die Stirnfläche erzielt wird.

Die Stirnfläche wird zwar als gewölbt bezeichnet, wirkt aber in Relation zu einem Kabel von einigen Zentimetern eher wie eine plane Auflagefläche. Und dies führt dazu, dass dann, wenn der zu vermessende Leiter keine geometrisch einfache und regelmässige Form aufweist, nicht tolerierbare Messfehler auftreten.

Kabelmäntel sind immer mehr oder weniger unregelmässig aufgebaut, was sich in einer gewissen Unrundheit ausdrückt. Dies führt dazu, dass der Messkopf auch bei exaktester Führung und Positionierung des Kabels an Stellen zur Auflage kommt, welche neben der eigentlichen Meßstelle liegen. Bei der Messung wird dann eine von der wirklichen Wandstärke abweichende Wandstärke gemessen und dadurch ein falsches Ergebnis erzielt.

Es wurden auch schon Versuche mit beweglichen, sich der Kabeloberfläche anpassenden Messköpfe unternommen. Diese haben sich jedoch als stark störungsanfällig erwiesen und konnten sich daher in der Praxis nicht durchsetzen.

Durch die Erfindung soll ein Messkopf angegeben werden, bei welchem unregelmässig aufgebaute Kabelmäntel die Messung nicht verfälschen können und durch nicht optimale Auflage des Messkopfs verursachte Messfehler ausgeschlossen sind.

Diese Aufgabe wird erfindungsgemäss dadurch gelöst, dass die Wölbung der Stirnfläche eine einem der durch die Orte gleicher Feldstärke des Streufeldes definierten konzentrischen Kreise zumindest annähernd entsprechende Kontur aufweist.

Die erfindungsgemässe Ausgestaltung des Messkopfs eröffnet die Möglichkeit der Anpassung der Kontur der Stirnfläche an die geometrischen Orte gleicher Veränderung der Spuleninduktivität oder der Spulengüte. Wenn die Spule die Schwingspule eines LC-Oszillators bildet oder Teil einer Messbrücke ist, dann sind diese geometrischen Orte die Orte gleicher Verstimmung des Schwingkreises bzw. der Messbrücke. Dadurch wird die Messung der Dicke eines Kabelmantels richtungsunabhängig und es spielt somit keine Rolle mehr, welche Lage das Messgut relativ zum Messkopf aufweist. Der erfindungsgemässe Messkopf weist keine beweglichen Teile auf und ist daher wartungsfrei. Ein weiterer wesentlicher Vorteil besteht darin, dass infolge der Zulässigkeit von Achsabweichungen keine genaue Führung des Kabels mehr erforderlich ist, was die Konstruktion der gesamten Messeinrichtung zusätzlich vereinfacht.

Nachstehend wird die Erfindung anhand eines Ausführungsbeispiels und der Figuren näher erläutert; es zeigen:

Fig. 1 ein Blockschema der elektrischen Ausrüstung eines Messkopfs,
Fig. 2a, 2b; 3a, 3b; 4a, 4b Skizzen zur Funktionserläuterung, und
Fig. 5a, 5b zwei Schnittdarstellungen eines erfindungsgemässen Messkopfes.

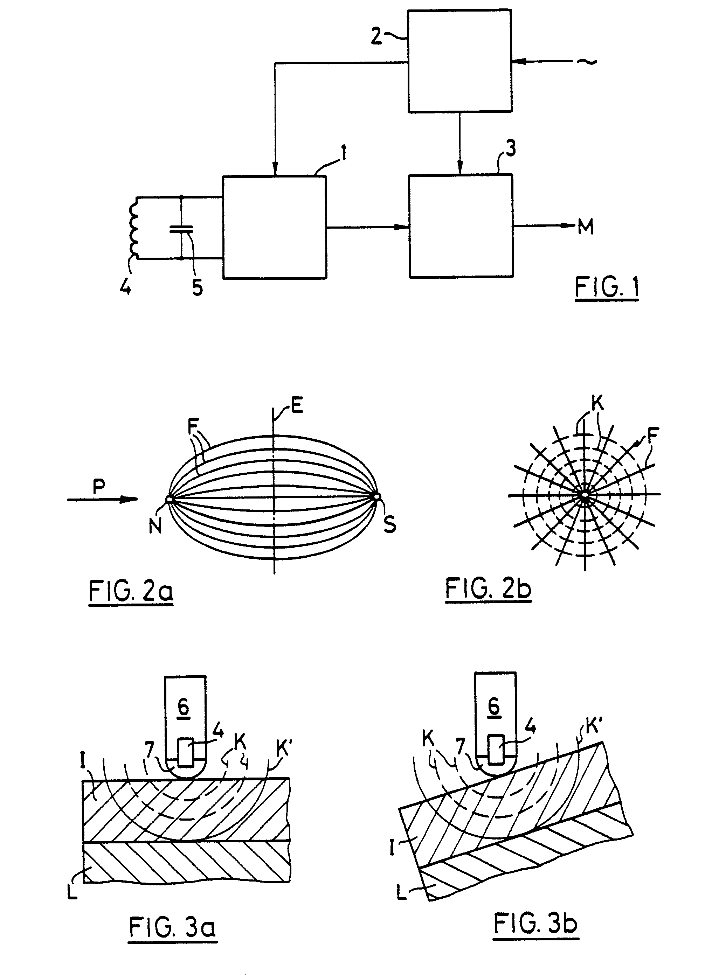

Gemäss Fig. 1 besteht die elektrische Ausrüstung eines Messkopfes im wesentlichen aus einem LC-Osszillator 1, welcher über eine Spannungsstabilisierungsstufe 2 mit einer Versorgungs-Wechselspannung beaufschlagt ist und über einen Verstärker 3 ein Meßsignal M abgibt. Der LC-Oszillator stellt einen Schwingkreis mit einer Spule 4 und einem Kondensator 5 dar; die Spule 4 ist die Meßspule für die induktive Dickenmessung. Anstelle des LC-Oszillators 1 kann für die induktive Dickenmessung auch eine Messbrücke verwendet werden (nicht dargestellt).

Wenn die Spule 4 von einem Wechselstrom durchflossen ist, dann erzeugt sie ein magnetisches Streufeld. Ein in dieses eintauchender elektrischer Leiter verändert die Spuleninduktivität und die Spulengüte und damit die Frequenz des Schwingkreises des LC-Oszillators bzw. den Abgleich der Messbrücke. Durch den in das Feld der Spule 4 eintauchenden Leiter wird also der Schwingkreis oder die Messbrücke verstimmt, wobei die Grösse dieser Verstimmung vom Abstand des Leiters abhängig ist. Wenn der Zusammenhang zwischen diesem Abstand und der Verstimmung bekannt ist, dann ist die durch das Messsignal M repräsentierte Verstimmung ein Mass für den Abstand des Leiters. Ist die Spule 4 in einen Messkopf eingebaut, welcher auf einem mit einer Isolation beschichteten Leiter aufliegt, dann entspricht der genannte Abstand der Dicke der Isolation, welche anhand der Grösse der Verstimmung bestimmt werden kann.

Fig. 2 zeigt schematisch das Magnetfeld zwischen zwei punktförmigen Polen N und S mit dem vom Nordpol N zum Südpol S verlaufenden Feldlinien F. Wenn mam durch dieses Magnetfeld eine senkrecht zur Verbindungsachse zwischen den Polen N und S verlaufenden Ebenen E legt, dann liegen die geometrischen Orte gleicher Feldstärke jeweils auf einem Kreis und die einzelnen Kreise sind konzentrisch. Die entsprechenden Kreise K sind in Fig. 2b, welche eine Ansicht in Richtung des Pfeiles P von Fig. 2a zeigt, gestrichelt eingezeichnet. Die Kreise K sind gleichzeitig die geometrischen Orte der Positionen eines in das Magnetfeld eintauchenden Leiters, welche eine gleiche Grösse der Veränderung der Spuleninduktivität einer durch die Pole N und S repräsentierten Spule und damit auch der Verstimmung des diese Spule enthaltenden LC-Schwingkreises (Fig. 1) bewirken.

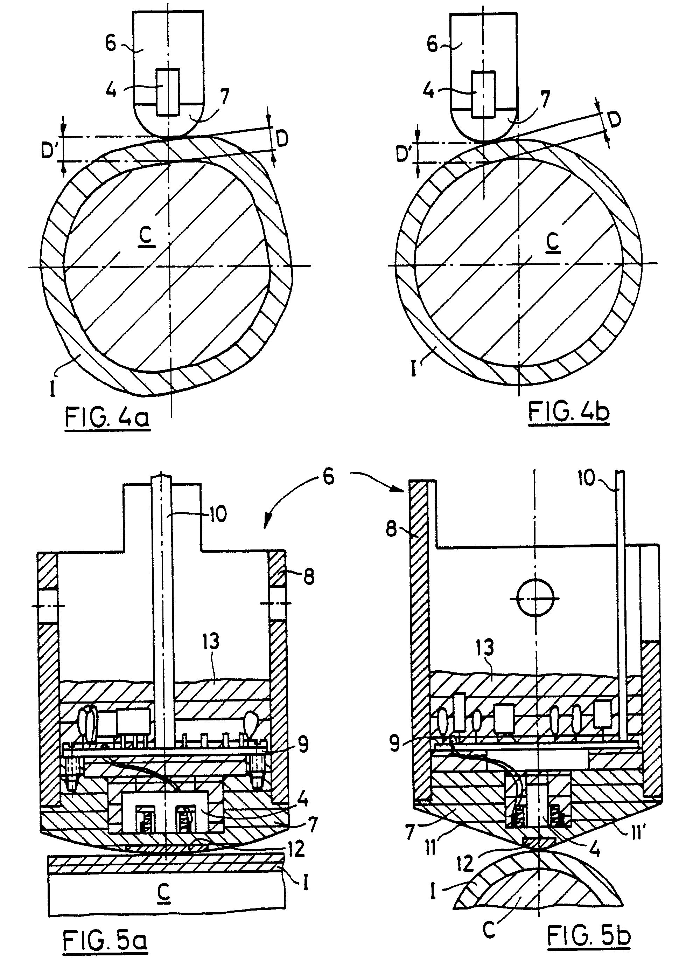

In den Fig. 3a, 3b und 4a, 4b ist schematisch ein Messkopf 6 mit einer Spule 4 und einem zur Auflage auf das Messgut vorgesehenen Auflageteil 7 dargestellt. Das Messgut ist in Fig. 3a, 3b durch einen streifenförmigen mit einer Isolation I versehenen Leiter L und in Fig. 4a, 4b durch ein Kabel C mit einem isolierenden Mantel I gebildet.

Die Konstruktion der Spule 4 ist so ausgelegt, dass so wie in Fig. 2b in einer Ebene senkrecht zu der die Pole verbinden Achse die geometrischen Orte der Positionen eines Leiters, welche eine gleiche Veränderung der Spuleninduktivität bewirken, jeweils auf konzentrischen Kreisen K liegen. Diese Ebene ist in den Figuren die Zeichnungsebene. Der Auflageteil 7 weist eine an einen dieser konzentrischen Kreise K angepasste Kontur auf.

In Fig. 3a nehmen der Messkopf 6 und der Leiter L mit der Isolation I die ideale Messposition ein, d.h., der Messkopf 6 steht senkrecht auf dem Messgut. In Fig. 3b schliessen Messkopf 6 und Messgut einen spitzen Winkel ein, dennoch berührt der Leiter L mit einer Oberfläche so wie in Fig. 3a gerade den Kreis K'; es ergibt sich also in beiden Fällen die gleiche Verstimmung des LC-Schwingkreises (Fig. 1). Man sieht daraus, dass durch die beschriebene Konstruktion der Spule 4 und des Auflageteils 7 die Messung der Dicke der Isolation I richtungsunabhängig geworden ist, und dass die Relativlage von Messkopf und Messgut keinen Einfluss auf das Messergebnis hat.

Fig. 4a zeigt das Beispiel einer Messung eines stark unrunden Kabels C. Da der Messkopf 6 infolge seines abgerundeten Auflageteils 7 auf dem Mantel I nur entlang einer Berührungslinie, oder, wie die Fig. 5a und 5b zeigen, nur an einem Berührungspunkt aufliegt, wird auch hier der richtige Wert der Dicke D des Mantels I gemessen. Wenn man sich vorstellt, dass der Messkopf eine plane Auflagefläche hätte, dann würde eine wesentlich grössere Manteldicke D gemessen.

Fig. 4b zeigt die Messung eines zwar runden Kabels C, welches aber nicht in der Messkopfachse liegt. Wie man sieht, wird auch hier trotz der Achsabweichung der richtige Wert der Dicke D des Mantels I gemessen, im Unterschied zu einem konventionellen Messkopf, mit welchem eine Mantel dicke D' gemessen würde.

Das in Fig. 2 dargestellte Magnetfeld geht von der Annahme zweier punktförmiger Magnetpole N und S aus. Selbstverständlich gibt es in der Praxis keine derartigen punktförmigen Pole, aber das bedeutet für die vorliegende Erfindung keine Einschränkung. Denn einerseits muss die Bedingung, dass die geometrischen Orte gleicher Verstimmung auf konzentrischen Kreisen liegen, nicht über den vollen Kreisumfang von 360°, sondern beispielsweise nur für einen Kreisbogen von etwa 120° erfüllt sein und anderseits muss dies auch nur für einen beschränkten Abstandsbereich gelten. Mit diesen Einschränkungen lässt sich das gewünschte Feld mit einer Spule mit einem U- oder E-Kern erzeugen.

Die Fig. 5a und 5b zeigen je einen Schnitt durch einen Messkopf 6; Fig. 5a mit der Schnittebene in der Achse eines zu vermessenden Kabels C und Fig. 5b mit der Schnittebene senkrecht zu dieser Achse.

Der Messkopf 6 besteht darstellungsgemäss aus einem rohrförmigen Gehäuse 8 aus beispielsweise Aluminium, in dessen freie Stirnseite der Auflageteil 7 eingesetzt ist. In einer zentralen Vertiefung des Auflageteils 7 ist die Spule 4, darstellungsgemäss eine solche mit einem E-Kern, angeordnet. Oberhalb der Spule 4 ist eine die erforderliche Elektronik tragende Printplatte 9 mit dem Auflagteil 7 verschraubt. Von der Printplatte 9 führt ein Anschlusskabel 10 im Gehäuse 8 nach oben und oberhalb der Printplatte 9 ist der freie Zwischenraum im Gehäuse 8 mit einem geeigneten Kunstharz 13 ausgegossen.

Der Auflageteil 7 besteht aus einem geeigneten Kunststoff, beispielsweise aus Polyoximethylen wie das von der Firma Dupont vertriebene Delrin und besitzt eine Kontur, welche an die konzentrischen Kreise K (Fig. 2b) gleicher Veränderung der Induktivität der Spule 4 angepasst ist und eine möglichst punktförmige Auflage auf den Mantel I des Kabels C ermöglicht. Darstellungsgemäss ist die Stirnfläche des Auflageteils 7 in Richtung der Feldlinie der Spule 4, das ist in Längsrichtung von deren E-Kern, in der Art einer Linse gewölbt und besteht aus zwei zueinander geneigten Seitenteilen 11, 11', deren Übergang leicht abgerundet ist. Die Neigung der Seitenteile 11, 11' ergibt die Anpassung an die konzentrischen Kreise K (Fig. 2b).

Selbstverständlich könnten die beiden Seitenteile 11, 11' noch stärker an die Form der konzentrischen Kreise K angepasst sein, d.h. der Auflageteil 7 könnte im Schnitt von Fig. 5b eine stärker kreisbogenförmige Kontur aufweisen. Wegen des Durchmessers des Messkopfs 7 ist jedoch die dargestellte Kontur vorzuziehen, welche ebenfalls alle angegebenen Vorteile aufweist und wegen des stark stumpfen Winkels von etwa 140° zwischen den beiden Seitenteilen 11, 11' wirkungsmässig einer kreisbogenförmigen Kontur entspricht.

Im Bereich der Spule 4 ist in die Stirnfläche des Auflageteils 7 ein Saphierplättchen 12 eingesetzt, um eventuelle Abnützungen der Stirnfläche durch das Messgut möglichst gering zu halten.

Der Messkopf 6 ist in eine entsprechende Halterung einer Messapparatur eingesetzt. Diese Apparatur kann als bekannt vorausgesetzt werden und ist deswegen hier nicht näher dargestellt. Es wird in diesem Zusammenhang auf die Kabelexentrizitätsmess- und -prüfgeräte der Anmelderin der vorliegenden Patentanmeldung verwiesen.

Wenn auch in der vorliegenden Beschreibung die Spule 4 als Schwingspule eines LC-Oszillators dargestellt ist, so darf dies nicht einschränkend verstanden werden. Denn da sich bei Annäherung eines elektrischen Leiters an eine wechselstromdurchflossene Spule neben der Spuleninduktivität auch die Spulengüte verändert, kann die Dickenmessung selbstverständlich auch anhand der Messung der Spulengüte, beispielsweise mit einer Messbrücke, erfolgen.

## Patentansprüche

1. Messkopf zur induktiven Messung der Dicke einer isolierenden Schicht (I) auf einem elektrischen Leiter (L), vorzugsweise auf einem Kabel, mit einer Spule (4) zur Erzeugung eines magnetischen Streufeldes, mit einem eine gewölbte Stirnfläche (11, 11') aufweisenden Auflageteil (7) zur Auflage auf den zu vermessenden Leiter (L) mit der isolierenden Schicht (I), und mit einer Einrichtung zur Messung der durch einen in das Streufeld der Spule eingetauchten elektrischen Leiter bewirkten Änderung der Induktivität oder der Güte der Spule, wobei die Spule so ausgebildet und angeordnet ist, dass im Bereich der Stirnfläche (11, 11') des Auflageteils (7) die geometrischen Orte gleicher Feldstärke des Streufeldes in einer Ebene auf konzentrischen Kreisen (K) liegen, dadurch gekennzeichnet, dass die Wölbung der Stirnfläche eine einem dieser konzentrischen Kreise zumindest annähernd entsprechende Kontur aufweist.

2. Messkopf nach Anspruch 1, dadurch gekennzeichnet, dass die Spule (4) einen E- oder U-förmigen Kern aufweist, und dass die konzentrischen Kreise (K) in senkrecht zur Verbindungsachse der Pole (N, S) der Spule verlaufenden Ebenen (E) liegen.

3. Messkopf nach Anspruch 2, dadurch gekennzeichnet, dass die Stirnfläche des Auflageteils (7) die Form eines einem der konzentrischen Kreise (K) entsprechenden Kreisbogens aufweist.

4. Messkopf nach Anspruch 2, dadurch gekennzeichnet, dass der Auflageteil (7) in Richtung der Ebenen (E) der konzentrischen Kreisen (K) einen giebelartigen Querschnitt aufweist und dass seine Stirnfläche aus zwei zueinander geneigten Seitenteile (11, 11') besteht.

5. Messkopf nach Anspruch 4, dadurch gekennzeichnet, dass die beiden Seitenteile (11, 11') einen stumpfen Winkel, vorzugsweise einen solchen von 120° bis 150° einschliessen.

6. Messkopf nach Anspruch 4 oder 5, dadurch gekennzeichnet, dass die Stirnfläche des Auflageteils (7) in der Richtung senkrecht zu den Ebenen (E) der konzentrischen Kreisen (K) und damit in Richtung der Feldlinien (F) der Spule (4) linsenartig gewölbt ist.

7. Messkopf nach Anspruch 6, dadurch gekennzeichnet, dass in die Stirnfläche des Auflageteils (7) im Bereich der vorgesehenen Auflage auf einen zu vermessenden Leiter (C) ein Saphierplättchen (12) eingesetzt ist.

8. Messkopf nach Anspruch 7, dadurch gekennzeichnet, dass der Auflageteil (7) aus Kunststoff, vorzugsweise aus Polyoximethylen besteht und in ein rohrförmiges Gehäuse (8) eingesetzt ist.

9. Messkopf nach Anspruch 8, dadurch gekennzeichnet, dass der Auflageteil im Abstand von seiner Stirnfläche eine Ausnehmung zur Aufnahme der Spule (4) aufweist.

## Claims

1. Measuring head for inductive measurement of the thickness of an insulating layer (I) on an electrical conductor (L), preferably on a cable, comprising a coil (4) for generating a magnetic stray field, a placing-on part (7), having a concave end face (11, 11'), for placing on the conductor (L) to be measured and having the insulating layer (I), and a device for measuring the change in the inductivity or the quality of the coil, as brought about by an electrical conductor immersed in the stray field of the coil, the coil being so constructed and arranged that in the region of the end face (11, 11') of the placing-on part (7) the geometrical loci of identical field strength of the stray field lie on concentric circles (K) in a plane, characterized in that the curvature of the end face has a contour which corresponds at least approximately to one of such concentric circles.

2. Measuring head according to Claim 1, characterized in that the coil (4) has an E-shaped or U-shaped core, and in that the concentric circles (K) lie in planes (E) extending perpendicularly to the connecting axis of the poles (N, S) of the coil.

3. Measuring head according to Claim 2, characterized in that the end face of the placing-on part (7) has the form of a circular arc corresponding to one of the concentric circles (K).

4. Measuring head according to Claim 2, characterized in that in the direction of the planes (E) of the concentric circles (K) the placing-on part (7) has a gablelike cross-section, and in that its end face consists of two side parts (11, 11') inclined to one another.

5. Measuring head according to Claim 4, characterized in that the two side parts (11, 11') enclose an obtuse angle, preferably one such as from 120° to 150°.

6. Measuring head according to claim 4 or 5, characterized in that in the direction perpendicular to the planes (E) of the concentric circles (K), and thus in the direction of the field lines (F) of the coil (4), the end face of the placing-on part (7) is concave like a lens.

7. Measuring head according to Claim 6, characterized in that a sapphire plate (12) is inserted into the end face of the placing-on part (7) in the region provided for placing on a conductor (C) to be measured.

8. Measuring head according to Claim 7, characterized in that the placing-on part (7) consists of plastic, preferably of polyoxymethylene, and is inserted into a tubular housing (8).

9. Measuring head according to Claim 8, characterized in that at a distance from its end face the placing-on part has a recess for accommodating the coil (4).

**Revendications**

1. Tête de mesure pour la mesure inductive de l'épaisseur d'une couche isolante (I) sur un conducteur électrique (L), de préférence sur un câble, avec une bobine (4) pour la formation d'un champ magnétique de dispersion, avec une partie d'appui (7) présentant une surface frontale (11, 11') bombée pour l'appui sur le conducteur (L) à mesurer avec la couche isolante (I), et avec un dispositif pour la mesure de la modification de l'inductivité ou du facteur de qualité de la bobine provoquée par un conducteur électrique plongé dans le champ de dispersion de la bobine, la bobine étant formée et disposée de telle façon que dans le domaine de la surface frontale (11, 11') de la partie d'appui (7) les lieux géométriques d'intensité de champ identique du champ de dispersion se trouvent dans un plan sur des cercles (K) concentriques, caractérisée en ce que le bombage de la surface frontale présente un contour correspondant au moins approximativement à l'un de ces cercles concentriques

2. Tête de mesure selon la revendication 1, caractérisée en ce que la bobine (4) présente un noyau en forme de E ou de U, et en ce que les cercles concentriques (K) se trouvent dans des plans (E) s'étendant perpendiculairement à l'axe de liaison des pôles (N, S) de la bobine.

3. Tête de mesure selon la revendication 2, caractérisée en ce que la surface frontale de la partie d'appui (7) présente la forme d'un arc de cercle correspondant à l'un des cercles concentriques (K).

4. Tête de mesure selon la revendication 2, caractérisée en ce que la partie d'appui (7) présente une section en forme de fronton dans la direction des plans (E) des cercles concentriques (K) et en ce que sa surface frontale consiste en deux parties latérales (11, 11') inclinées l'une vers l'autre.

5. Tête de mesure selon la revendication 4, caractérisée en ce que les deux parties latérales (11, 11') décrivent un angle obtus, de préférence un angle de 120 à 150°.

6. Tête de mesure selon la revendication 4 ou 5, caractérisée en ce que la surface frontale de la partie d'appui (7) est bombée en forme de lentille dans la direction perpendiculaire aux plans (E) des cercles concentriques (K) et ainsi dans la direction des lignes de champ (F) de la bobine (4).

7. Tête de mesure selon la revendication 6, caractérisée en ce qu'une plaquette de saphir (12) est insérée dans la surface frontale de la partie d'appui (7) dans le domaine de l'appui prévu sur un conducteur (C) à mesurer.

8. Tête de mesure selon la revendication 7, caractérisée en ce que la partie d'appui (7) consiste en matière plastique, de préférence en polyoxyméthylène et est insérée dans un boîtier (8) en forme de tube.

9. Tête de mesure selon la revendication 8, caractérisée en ce que la partie d'appui présente à distance de sa surface frontale un évidement pour la réception de la bobine (4).

FIG. 1

FIG. 2a

FIG. 2b

FIG. 3a

FIG. 3b

FIG. 4a

FIG. 4b

FIG. 5a

FIG. 5b